# EUROPÄISCHE PATENTSCHRIFT

(11) **EP 0 844 748 B1**
(45) Veröffentlichungstag und Bekanntmachung des Hinweises auf die Patenterteilung: **16.06.1999**
(21) Anmeldenummer: 97108186.4
(22) Anmeldetag: 21.05.1997
(51) Int. Cl.: H04B 10/10

(54) **Verfahren und Vorrichtung zur optischen Uebertragung von Daten über Freiraumstrecken**
Method and apparatus of optical data transmission along a free space path
Procédé et appareil de transmission optique de données sur un trajet en espace libre

(30) Priorität: 25.11.1996 CH 290596
(43) Veröffentlichungstag der Anmeldung: 27.05.1998
(73) Patentinhaber: Oerlikon Contraves AG, 8050 Zürich (CH)
(72) Erfinder: Fischer, Edgar, 8555 Müllheim Dorf (CH); Czichy, Reinhard Hanno, 9034 Eggersriet (CH)
(74) Vertreter: Hotz, Klaus, Dipl.-El.-Ing./ETH Patentanwalt

(56) Entgegenhaltungen:
- EP-A- 0 365 028
- EP-A- 0 653 853
- NAPASAB V ET AL: "POLARIZATION RECOMBINING: A NEW AUTOMATIC POLARIZATION CONTROL SCHEME FOR HETERODYNE OR HOMODYNE OPTICAL RECEIVERS" JOURNAL OF OPTICAL COMMUNICATIONS, BERLIN, DE, Bd. 9, Nr. 9, September 1988, Seiten 102-107, XP000000862

## Beschreibung

Die vorliegende Erfindung bezieht sich auf ein Verfahren und eine Vorrichtung zur optischen Übertragung von Daten über Freiraumstrecken zwischen zwei Stationen im Weltraum.

Hierbei handelt es sich um Stationen im Weltraum mit einem opto-mechanischen Aufbau zur optischen Übertragung von Daten über Freiraumstrecken unter Verwendung des Prinzipes der Phasenmodulation einer durch einen Laser erzeugten Lichtquelle und durch homodyne Überlagerung der empfangenen Lichtwelle mit der Lichtwelle eines zweiten Lasers mittels Photodetektion.

Die optische Datenübertragung unter Verwendung von Lichtwellenleitern hat in den letzten Jahren die leitungsgebundene Übertragung von Daten insbesondere auf langen Übertragungsstrecken revolutioniert. Die hierbei erarbeitete Technologie verspricht auch grosse Effizienzsteigerungen bei der leitungslosen Übertragungstechnik, sofern der störende Einfluss der Erdatmosphäre ausgeschlossen werden kann. Während auf der Erdoberfläche Wahl der Wellenlänge einer hierzu geeigneten Lichtquelle gewisse Erfolge verspricht, sind im Weltraum die Grenzen eines solchen Übertragungssystems kaum von Umweltbedingungen beeinflusst und hängen überwiegend von den Eigenschaften des verwendeten Systems selbst ab. Bei der Kommunikation zwischen Satelliten können somit auch die grossen Vorteile der optischen Nachrichtentechnik, nämlich eine theoretisch extrem hohe Bandbreite des Kanals in Verbindung mit kleinen und leichten Systemen, die trotzdem die Aussendung extrem gebündelter Strahlen sowie einen hoch richtungsaufgelösten Empfang ermöglichen, voll ausgeschöpft werden.

Durch letztere Eigenschaften sinkt zudem der für die Kommunikation erforderliche Leistungsbedarf erheblich. In der einfachsten Ausführung eines digitalen optischen Übertragungssystems erfolgt die Modulation einer optischen Quelle durch deren vom logischen Zustand des zu übertragenden Datenbits abhängigen Ein- bzw. Ausschaltung. Der Empfang erfolgt durch eine Photodiode, die die datenabhängige Intensität des Lichts in einen daten-abhängigen Photostrom umsetzt, welcher elektronisch verstärkt und weiterverarbeitet wird. Mit dieser einfachen Methode lassen sich bei Ausschluss weiterer Fremdeinwirkungen Daten mit einer Fehlerwahrscheinlichkeit von 10⁻⁹ übertragen, sofern im Mittel für jedes Datenbit (theoretisch) 10.5 Photonen zur Detektion zur Verfügung stehen. Allerdings wird dieser Wert in der Praxis bei weitem nicht erreicht. Um die Leistung einer optischen Quelle zu jedem Zeitpunkt der Übertragung voll auszunutzen, wird auch anstatt der Amplitude der Lichtwelle deren Phase beeinflusst. In einem kürzlich vorgestellten System wird dabei die aus der Faseroptik und Funktechnik bekannte differentielle Phasenmodulation benutzt (J. C. Livas et al.,"High data rate systems for space applications", SPIE Vol. 2381, p.38-47).

Hierbei wird das schwache empfangene Lichtsignal zunächst in einem quantenoptischen Verstärker in seiner Leistung erhöht und anschliessend auf zwei verschieden lange optische Pfade aufgeteilt und in einem Koppler wieder zusammengeführt, dessen beide Ausgangstore mit jeweils einer Photodiode verbunden sind. Je nach Phasenlage der in dem Koppler zusammmengeführten Lichtwellen zueinander wird die resultierende Lichtleistung auf die beiden Photodioden verteilt. Da ein optischer Pfad das Licht für die Dauer eines Datenbits verzögert, werden jeweils die Phasen zweier nacheinander übertragenen Bits miteinander verglichen. Durch entsprechende Codierung sowie einen Phasenunterschied von jeweils 0 oder 180 Grad wird je nach Datenbit jeweils eine der beiden Photodioden die volle Lichtleistung erhalten. Bei der optischen und mechanischen Realisierung solcher Systeme wird neben der geforderten Zuverlässigkeit ein geringes Gewicht der entsprechenden Anordnungen sowie ein möglichst niedriger Platzbedarf angestrebt. So schlagen Carlson et al. die Integration optischer Elemente in einem quasi monolithischen Glasblock vor(R. T. Carlson et al.,"Monolithic glass block lasercom terminal: hardware proof of concept and test results", SPIE Vol. 2381, p.90-102). Verschiedene in optische Elemente, die in genormt grossen Glaswürfeln eingepackt sind, werden zu einem Block zusammengefügt, der dann als eine Art optischer Schaltkreis angesehen werden kann.

So stehen eingebettete Spiegel zur Verfügung, die das Licht eines kollimierten Strahl um 90 Grad umlenken, nach verschiedenen Polarisationen aufteilen, bestimmte Wellenlängen ausfiltern sowie über Flüssigkristalle die Manipulation der Polarisation des durchstrahlenden Lichts ermöglichen.

Nachteilig ist dabei die Tatsache, dass der Strahlengang innerhalb des Blocks durch äussere Eingriffe nicht mehr manipuliert werden kann und für die gesamte optische Schaltung an ihren Schnittstellen jeweils kollimierte Strahlen zur Verfügung stehen müssen. Die Divergenz dieser Strahlen soll wegen des kompakten Aufbaus der optischen Schaltung und den damit verbundenen kurzen optischen Wegen nicht ins Gewicht fallen. Allerdings erspart diese Anordnung keineswegs das nicht integrierbare Teleskop zur Sendung und zum Empfang der entsprechenden Lichtstrahlen.

Nachteilig wirkt sich ausserdem der verhältnismässig grosse und massive Glasblock aus, welcher prinzipiell nicht daraufhin optimiert werden kann, die Belastungen eines Raketenstarts unbeschadet zu überstehen.

Nachteilig bei der Datenübertragung durch Amplitudenmodulation wirkt sich der Einfluss von Fremdlichtquellen wie z. B. der Sonne aus, welche durch schmalbandige optische Filter von den Detektoren ferngehalten werden müssen. Sowohl beim Empfang amplitudenmodulierter Signale als auch bei der Detektion von mittels differentieller Phasenmodulation encodierten Signalen ist im allgemeinen eine vorherige Verstärkung durch quantenoptische Verstärker erforderlich, deren durch spontane Emission bedingtes Eigenrauschen wiederum durch schmalbandige optische Filter zu reduzieren ist.

Folglich ist es Aufgabe der im folgenden beschriebenen Erfindung, die Nachteile des Standes der Technik zu vermeiden und ein Verfahren sowie eine Vorrichtung zu seiner Durchführung aufzuzeigen, welche eine gewichtssparende sowie mechanisch und thermisch unempfindliche Anordnung der für ein optisches Übertragungssystem erforderlichen optischen Elemente aufweisen.

Diese Aufgabe wird erfindungsgemäss durch die Merkmale der unabhängigen Ansprüche **1** und **5** gelöst.

Die Erfindung ermöglicht den opto-mechanischen Aufbau einer digitalen Kommunikation im Weltraum mit Hilfe eines optischen Freiraum-Übertragungssystems. Als Übertragungsprinzip wird die Phasenmodulation einer durch einen Laser erzeugten Lichtwelle angewandt, deren Detektion durch homodyne Überlagerung der empfangenenen Lichtwelle mit der Lichtwelle eines zweiten Lasers auf einem Photodetektor erfolgt. Der optische Homodynempfang, was die Überlagerung des empfangenen Lichtsignals mit einer dem Träger des empfangenen Lichtsignals gleichfrequenten Lichtwelle bedeutet, ist eines der empfindlichsten Detektionsverfahren und gewährleistet gegenüber Fremdlicht mit im allgemeinen unterschiedlicher optischer Frequenz grösste Unempfindlichkeit. Die einzelnen Elemente der Optik des Übertragungssystems sind mit Ausnahme der zur Grobausrichtung von Sendestrahl und empfangenem Strahl verwendeten Spiegel in einer Einheit zusammengefasst, welche aus mehreren Untereinheiten besteht, die die in einzelnen optischen Pfaden angeordneten optischen Elemente in rohrförmigen Halterungen beinhalten.

Alle rohrförmigen Halterungen werden auf einer metallischen und flachen Struktur zusammengehalten und die von ihnen ausgehenden bzw. in diese Halterungen hineinzuführenden kollimierten Strahlen werden parallel zu dieser Ebene durch Umlenkspiegel geführt. Da am Endpunkt eines durch eine rohrförmige Halterung geführten optischen Pfads meistens ein mit Elektronik versehener Sensor oder ein elektromechanischer Aktuator vorzufinden ist, wird die dadurch erzeugte Wärme durch die rohrförmige Halterung weitergeführt. Im Unterschied zur mechanischen Anordnung verschiedener optischer Pfade in monolithischen Strukturen ist damit der Wärmefluss global auf eine Richtung eingeschränkt. Da Wärmefluss immer auch Temperaturgradienten bedingt, unterschiedliche Temperaturen aber auch eine unterschiedliche Wärmedehnung von Festkörpern erzeugen, bewirkt die Einschränkung des Wärmeflusses auf global eine Richtung möglicherweise zwar unterschiedliche Längen-dehnungen verschiedener rohrförmiger Halterungen, aber durch die fehlende seitliche mechanische Verbindung den Wegfall von Biegemomenten, die zu einer für die Leistungsfähigkeit optischer Systeme sehr schädlichen Krümmung der optischen Pfade führen würden.

Die alle rohrförmigen Halterungen verbindende flache metallische Struktur leitet die aus den mit ihr verbundenen rohrförmigen Halterungen zufliessende Wärme weiter, wobei - durch die geringe Dicke des Materials dieser Struktur in Achsrichtung der rohrförmigen Halterungen- kein Temperaturgradient entsteht, der durch unterschiedliche Wärmedehnung ein die flache metallische Struktur wölbendes Biegemoment bedingt.

Ein weiterer Vorteil der Erfindung ist die Abtrennnung der am meisten Abwärme erzeugenden Baugruppen, um eine weitere Reduktion thermisch bedingter Einflüsse auf das Betriebsverhalten der gesamten Anordnung zu erzielen. Deshalb werden die erforderlichen Laser, Modulatoren und z.T. quantenoptische Verstärker in einer anderen Halterung untergebracht und deren optische Emission über Lichtwellenleiter der Optik zugeführt.

Vorteile der erfindungsgemässen Anordnung sind somit die Einschränkung der Wirkung grösserer Wärmequellen auf die Funktionsfähigkeit der Optik, einerseits durch die Abtrennung der als grösste Wärmequellen wirkenden quantenoptischen Lichtquellen und - verstärker sowie Modulatoren, andererseits durch eine mechanische Konstruktion der Anordnung, die den Einfluss von durch Wärmequellen hervorgerufenen inhomogenen Dehnungen minimiert. Als ein weiterer Vorteil ist die Realisierung verhältnismässig langer optischer Pfade bei Wahrung der thermischen und mechanischen Stabilität der Anordnung anzuführen.

Weitere Einzelheiten, Merkmale und Vorteile der Erfindung ergeben sich nicht nur aus den Ansprüchen und diesen zu entnehmenden Merkmalen -für sich und/oder in Kombination, sondern auch aus der nachfolgenden Beschreibung eines bevorzugten Ausführungsbeispiels.

Es zeigen:
- **Fig. 1**: ein Prinzipschema der optischen Anordnung zur gerichteten Aussendung und zum gerichteten Empfang optischer Nachrichtensignale,
- **Fig. 2**: ein Blockschaltbild der gesamten Anordnung zur Erzeugung des modulierten Sendelichts,
- **Fig. 3**: ein Blockschaltbild eines alternativen Konzeptes zur Erzeugung von moduliertem Sendelicht,
- **Fig. 4**: ein Blockschaltbild zur Erzeugung des dem empfangenen Lichtstrahl zu überlagernden Lichts,
- **Fig. 5**: eine Aussenansicht des mechanischen Aufbaus der optischen Bank,
- **Fig. 6**: die Verbindung von Quarzglasplatte und metallischer flacher Struktur,

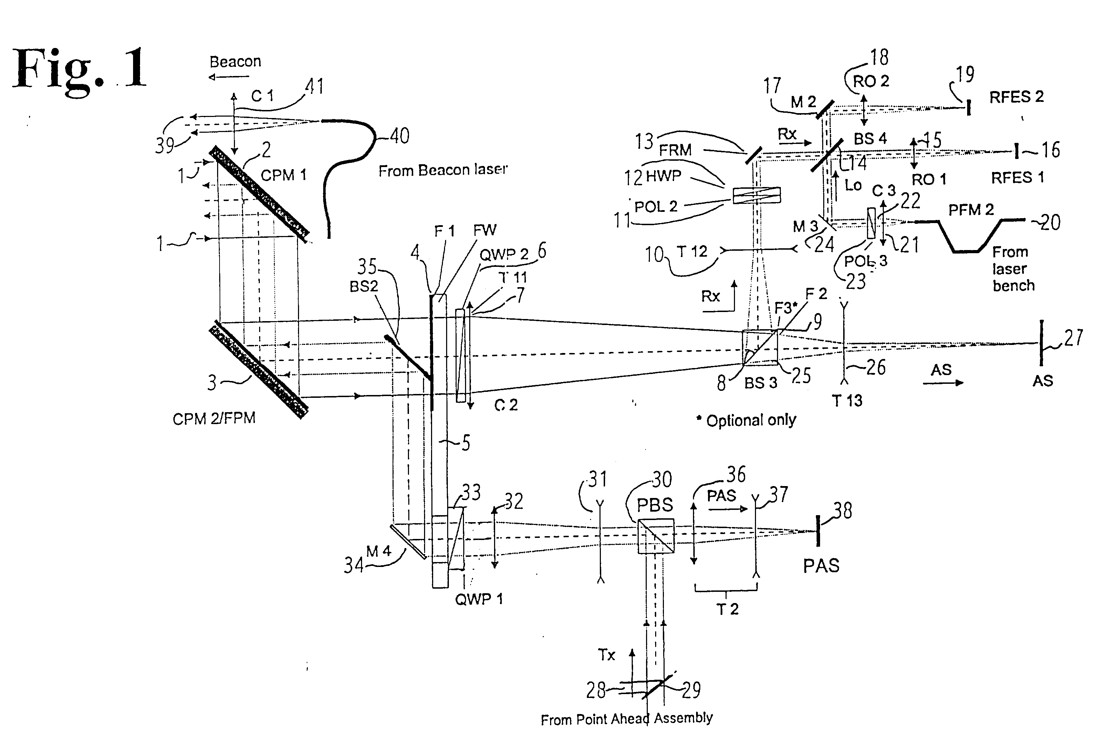

In **Fig. 1** ist ein Schema dargestellt, dass die Funktionsweise der Optik einer Station eines Freiraum-Kommunikationssystems darlegt. Ein von einer Gegenstation ausgestrahltes Lichtsignal **1** wird über einen ersten Spiegel **2** und einen zweiten Spiegel **3**, welche beide zur groben Einstellung der Sende- und Empfangsrichtung in einer periskopischen Anordnung mechanisch bewegbar gelagert sind, auf ein erstes optisches Filter **4** gerichtet. Das erste optische Filter **4** ist auf einer als Träger verwendeten Quarzglasplatte **5** angebracht und überträgt nur die zur Datenübertragung und für eine besondere Aquisitionseinrichtung vorgesehenenen optischen Wellenlängen. Dabei ist die Hauptaufgabe der Quarzglassplatte **5** als Strahlenschutz der dahinter angeordneten Optik und der Auswerte-Sensoren zu dienen. Das Licht des zur Kommunikation verwendeten Lichtsignals **1** ist circular polarisiert und erhält beim Durchgang durch eine Viertelwellenplatte **6** eine definierte lineare Polarisation. Mittels einer ersten Sammellinse **7** wird das Lichtsignal **1** anschliessend gebündelt auf einen ersten dichroi-tischen Strahlteiler **8** geschickt, und durch Reflektion um 90 Grad umgelenkt, dadurch durch ein auf der entsprechenden Fläche des ersten Strahlteilers **8** optional angebrachtes zweites optisches Filter **9** hindurch auf eine erste Streulinse **10** gerichtet und als kollimierter Strahl weitergeleitet. Ein erstes Polarisationsfilter **11** beseitigt unerwünscht polarisiertes Licht, eine anschliessend vom Lichtstrahl **1** durchlaufene Halbwellenplatte **12** ermöglicht die genaue Einstellung von dessen Polarisationsrichtung. Nach einer weiteren Reflexion an einem zur Feinabstimmung bewegbar ausgeführtem dritten Spiegel **13** wird der Lichtstrahl **1** an einem zweiten Strahlteiler **14** in zwei gleichstarke Teilstrahlen zerlegt und nach einer zweiten Sammellinse **15** unmittelbar auf einen ersten Detektor **16** sowie mittelbar nach einer zusätzlichen Reflexion an einem fest eingestellten vierten Spiegel **17** und einer dritten Sammellinse **18** auf einen zweiten Detektor **19** gerichtet.

Bei der Übergabe von der Aquisition mit der Leuchtbake auf das Trackingsignal ist u.U. zunächst eine gezielte Suchbewegung des dritten Spiegels **13** notwendig, damit der empfangene aussermittige Lichtfleck ins Zentrum des Trackingdetektors gebracht wird. Hierbei darf der Lichtfleck zunächst auch ausserhalb des Gesichtsfelds der kohärenten Detektoren **16, 19** liegen.

Über einen polarisationserhaltenden Lichtwellenleiter **20** wird das Licht eines als Lokaloszillator dienenden Lasers auf eine vierte Sammellinse **21** gerichtet und als kollimierter Strahl **22** durch ein zweites Polarisationsfilter **23** über einen fest eingestellten Umlenkspiegel **24** auf den zweiten Strahlteiler **14** gerichtet, wodurch zwei kollimierte Lichtstrahlen entstehen, die die zwei aus dem Lichtstrahl 1 entstandenen Teilstrahlen überlagern. In beiden Detektoren **16** und **19** wird durch die Detektion eines aus dieser Überlagerung zweier Lichtquellen resultierenden Photostroms ein elektrisches Datensignal gewonnen. Um den bei diesem Prozess ebenfalls anfallenden Gleichstrom auf das mindesterforderliche Mass zu beschränken, wird angestrebt, den Intensitätsverlauf des Lokaloszillator-Lichtstrahls über seinen Querschnitt an den des Lichtstrahls **1** nach Verlassen der ersten Streulinse **10** anzupassen. Weiterhin erlaubt die Halbwellenplatte **12** eine Anpassung der Polarisation des Lichtstrahls **1** an die des Lokaloszillator-Lichtstrahls. Auf demselben optischen Pfad wie das Lichtsignal **1** gelangt ein durch eine optische Bake der Gegenstation erzeugter Lichtstrahl zum ersten Strahlteiler **8**. Da dieser Lichtstrahl auf einer anderen Wellenlänge abgestrahlt wird, um den effizienten Einsatz von Silizium-Detektoren zu ermöglichen, wirkt die Viertelwellenplatte **6** anders als vorgesehen und es erscheint ein beliebig polarisierter Lichtstrahl am ersten Strahlteiler **8**, der für das Bakenlicht transparent erscheint, wo er auf ein an der entsprechenden Fläche angebrachtes optisches Filter **25** trifft, welches nur die Wellenlänge des Bakenlichts passieren lässt. Nach einer zweiten Streulinse **26** trifft der Lichtstrahl der Bake der Gegenstation auf einen CCD-Sensor **27**. Die geometrische Trennung der Leuchtbake vom Empfangsstrahlengang ist schon zur Vermeidung der Selbstblendung notwendig.

Die in unkorrigierten optischen Abbildungssystemen anzutreffende tonnenförmige Verzerrung des Bildes eines Gegenstands wird hierbei gezielt ausgenutzt, um die Winkelauflösung des Sensorsystems bei geringen Abweichungen von der optischen Achse auf Kosten der Randbereiche zu steigern.

Ein Sendestrahl **28** wird über einen beweglichen fünften Spiegel **29** zur Steuerung eines Vorhaltewinkels gegenüber dem empfangenenen Lichtstrahl **1**, was aufgrund der möglichen Relativbewegung zweier Stationen zueinander notwendig ist, auf einen Polarisationsstrahlteiler **30** geführt, in diesem in Richtung zweier den Strahl aufweitenden weiteren Linsen **31** und **32** reflektiert und anschliessend durch eine zweite Viertelwellenplatte **33** geleitet. Der Lichtstrahl durchtritt die Quarzglasplatte **5** in einer zu diesem Zweck angebrachten Bohrung, deren Rand geschwärzt ist, um die Störung des empfangenen Lichtstrahls **1**, der ebenfalls durch die Quarzglasplatte **5** geführt wird, durch das Streulicht des sehr leistungsstarken Sendestrahls **28** zu vermeiden. Der Sendestrahl **28** wird im übrigen in seiner seitlichen Ausdehnung begrenzt, um, nachdem er über romboidförmig auf der Quarzglasplatte **5** angeordnete Spiegel **34** und **35** auf die auch vom empfangenen Lichtstrahl mitbenutzten Spiegel **2** und **3** geleitet wurde, nicht durch Rückstreuung an den Oberflächen der Spiegel **2** und **3** den empfangenen Lichtstrahl beeinflusst, wobei der Spiegel **35** gleichzeitig die Funktion einer Stopblende für derart rückgestreutes Licht ausübt. Aufgrund des wesentlich kleineren Sendestrahldurchmessers als der des Empfangsstrahldurchmessers fallen Missweisung-fehler der Stellspiegel weniger ins Gewicht.

Es findet zudem elektronisch eine Kommunikation zwischen Spiegel **13** und Spiegel **29** statt, sodass Spiegel **13** seine momentane Auslenkung an Spiegel **29** meldet, damit Spiegel **29** seine 'Fehlsichtigkeit' korrigieren kann. Der Stellbereich des Spiegels **29** ist relativ gross, sodass neben dem Vorhaltewinkel auch fertigungstechnische Toleranzen korrigiert werden können.

Die empfindliche Sensorelektronik ist in unmittelbarer Nähe zu den auf der optischen Bank vorgesehenen Sensoren plaziert. Diese Elektronik ist jedoch von der optischen Bank abgesetzt, insbesondere hat sie keinen thermischen Kontakt.

Ein geringer Teil der optischen Leistung des Sendestrahls wird an der der Quarzglasplatte **5** zugewandten speziell vergüteten resp. nicht vergüteten Seite der zweiten Viertelwellenplatte **33** reflektiert, durchwandert die zweite Viertelwellenplatte **33** ein zweites Mal und wird in seiner ursprünglich linearen Polarisation um 90 Grad gedreht durch den Polarisationsstrahlteiler **30** und eine vierte Sammellinse **36** sowie eine Streulinse **37** hindurch auf einen Sensor **38** zur Messung des Vorhaltewinkels geführt

Parallel zum empfangenen Lichstrahl **1** wird ein Bakenlichtstrahl **39** abgestrahlt, dessen Licht über einen Lichtwellenleiter **40** aus einem Bakenlaser zugeführt und mittels einer Sammellinse **41** kollimiert wird, d.h. bedeutende Wärmequellen (Laser, Modulator) werden abgesetzt und über flexible Lichtwellenleiter **40** angekoppelt. Dadurch wird ferner erreicht, dass ein vereinfachter Systemaufbau möglich ist und die Anfälligkeit gegenüber Dejustage entfällt.

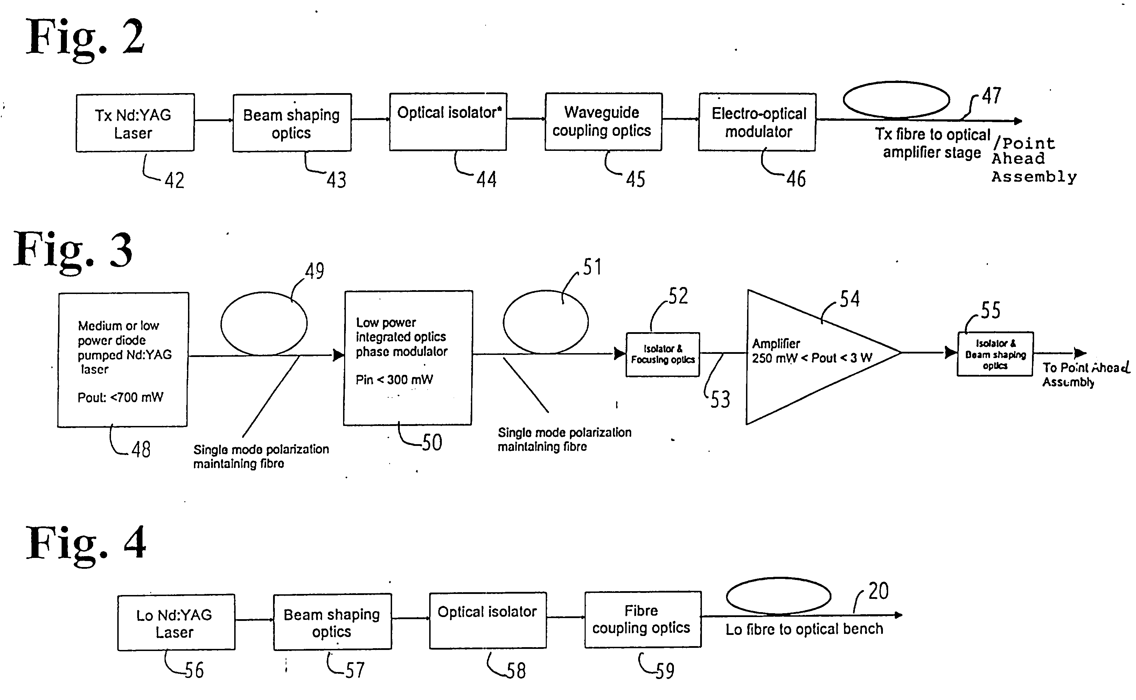

In **Fig. 2** wird die Erzeugung modulierten Sendelichts dargestellt. Ein Diodenlaser-gepumpter ND:YAG-Laser **42** erzeugt hochkohärentes Licht, das durch eine die Strahlform anpassende Optik **43** und einen optischen Isolator **44** läuft, um anschliessend über eine an einen optischen Wellenleiter ankoppelnde Optik **45** in einen elektrooptischen Phasenmodulator **46** geführt zu werden. Dessen ausgangsseitiger Wellenleiter ist mit einer optischen Faser **47** verbunden, die nur einen Mode überträgt und die Polarisation des in ihr geführten Lichts erhält.

Ein alternatives Konzept ist in **Fig. 3** aufgezeigt. Ein mittlere oder schwache Leistung abstrahlender Diodenlaser-gepumpter ND:YAG-Laser **48** leitet seine Lichtleistung durch einen polarisationserhaltenden Einmoden-Lichtwellenleiter **49** in einen nur für niedrige optische Leistung ausgelegten elektrooptischen Phasenmodulator **50**, dessen Ausgang mit einem polarisationserhaltenden Einmoden-Lichtwellenleiter **51** mit einem optischen Isolator **52** verbunden ist, der ausserdem eine fokussierende Optik beinhaltet, und ausgangsseitig einen kollimierten Strahl **53** erzeugt, welcher durch einen quantenoptischen Verstärker **54** und einen den Strahl anpassende Optiken enthaltenden optischen Isolator **55** auf die Vorrichtung zur Einstellung des Vorhaltewinkels geschickt wird. Während der ND:YAG-Laser **48** eine Leistung von maximal 0.7 Watt erzeugt, sinkt im Phasenmodulator **50** diese Leistung auf weniger als 0.3 W, um anschliessend im quantenmechanischen Verstärker **54** auf bis zu 3W angehoben zu werden.

**Fig. 4** zeigt das einfachere Blockschaltbild einer Anordnung zur Erzeugung der im optischen Empfänger benötigten überlagernden Lichtwelle. Diese ist unmoduliert und muss lediglich in ihrer Mittenfrequenz genau der Trägerfrequenz des Sendelichts entsprechen. Ein Diodenlaser-gepumpter ND:YAG-Laser **56** arbeitet als quantenoptischer Lokaloszillator-Laser, dessen Licht über eine strahlformende Optik **57**, einen optischen Isolator **58** und einer Faser-Einkoppeloptik **59** auf den polarisationserhaltenden Lichtwellenleiter **20** geführt wird.

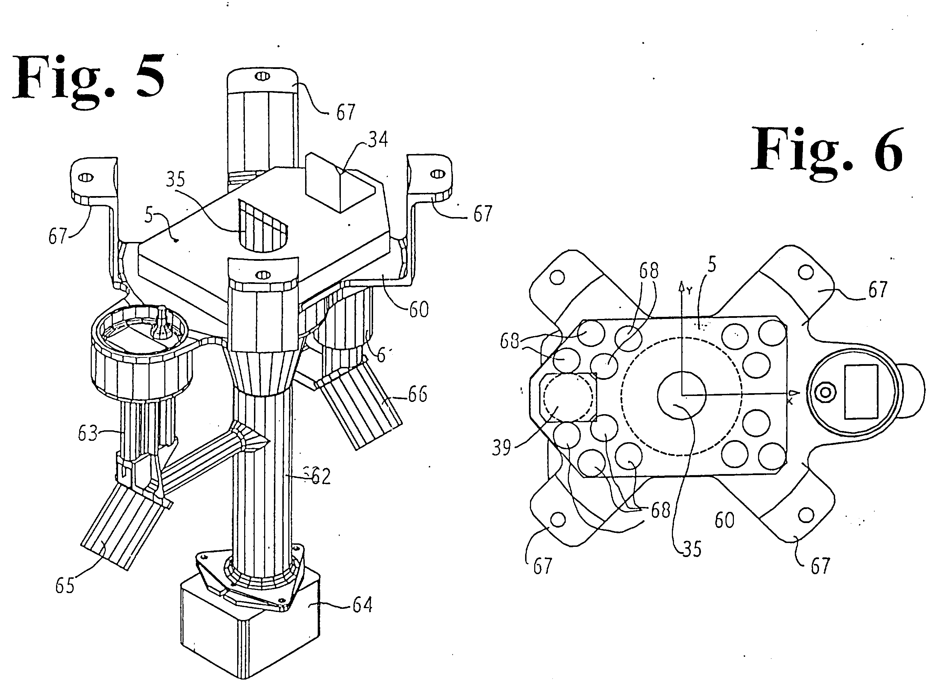

**Fig. 5** zeigt die äussere Ansicht einer optischen Bank, bei welcher an einer metallischen flachen Struktur **60** rohrförmige Halterungen **61**, **62** und **63** angebracht sind. Das Gehäuse **64** beherbergt den zur Aquisition vorgesehenen CCD-Sensor **27** sowie die zu diesem Sensor notwendige Elektronik und stellt somit eine Wärmequelle dar. Weiterhin enthält ein Gehäuse **65** den bewegbar ausgeführten dritten Spiegel **13** nebst Antrieb. In einem Gehäuse **66** befindet sich der bewegliche Spiegel **29** zur Kontrolle des Vorhaltewinkels des Sendestrahls. Die metallische flache Struktur **60** wird über Montagefüsse **67** mit dem Gehäuse der gesamten Apparatur verbunden, wobei eine thermisch bedingte laterale Dehnung der metallischen flachen Struktur **60** nur sehr geringe von den verspannten Montagefüssen **67** ausgehende Biegemomente auf die metallische flache Struktur **60** bedingt. Auf der metallischen flachen Struktur **60** befindet sich die Quarzglasplatte **5**, an ihr wiederum die beiden Spiegel **34** und **35**, wobei der Glaskörper des Spiegels **34** gleichzeitig die für den Durchtritt des Sendestrahls durch die Quarzglasplatte **5** in ihr angebrachte Bohrung überdeckt. Da Quarzglas und der für die metallische flache Struktur verwendete Werkstoff im allgemeinen einen unterschiedlichen Wärmeausdehnungskoeffizienten haben, ergeben sich bei Temperaturschwankungen, insbesondere aber bei Temperaturunterschieden zwischen der Quarzglasplatte **5** sowie der metallischen flachen Struktur **60** mechanische Scherspannungen, die durch eine geeignete Verbindungstechnik aufgefangen werden müssen.

In **Fig. 6** ist die Verbindung von Quarzglasplatte **5** mit der metallischen flachen Struktur **60** dargestellt. Die Verbindung erfolgt durch mehrere Zonen **68**, welche eine dünne Schicht Silikonkleber enthalten, der dank seiner Elastizität Scherungen ohne hohe entsprechende mechanische Spannungen aufnimmt.

## Patentansprüche

1. Verfahren zur optischen Übertragung von Daten über die Freiraumstrecke zwischen einer Station und einer Gegenstation im Weltraum, bei dem ein durch einen ersten Laser erzeugter Sendestrahl **(28)** phasenmoduliert wird, bei dem ein von der Gegenstation ausgestrahlter circular polarisierter und zur Datenübertragung vorgesehener Lichtstrahl **(1)** mit einem Lichtstrahl eines über einen Lichtwellenleiter **(20)** geleiteten zweiten lokalen Lasers der Station mittels Photodetektion **(16, 19)** homodyn überlagert wird **(10** bis **19, 21** bis **24)**, bei dem eine Feinabstimmung **(13)** der homodynen Überlagerung zum Ausgleich von Relativbewegungen zwischen den Stationen erfolgt, wobei der circular polarisierte Lichtstrahl **(1)** in der Station empfangen wird und mittels einer Viertelwellenplatte **(6)** in linear polarisiertes Licht rückgewandelt wird und wobei mittels einer Halbwellenplatte **(12)** die Richtung der Polarisation genau eingestellt wird, wodurch die Polarisation eine Bewegung der Stationen um die durch ihre Strahlrichtung festgelegte Achse bezüglich der homodyn überlagerten Lichtstrahlen keine Änderung bei der Photodetektion hervorruft, und bei dem eine Korrektur **(29)** der Auslenkung des Sendestrahls **(28)** der Station in Abhängigkeit von der mittels elektronischer Kommunikation übertragenen momentanen Auslenkung der Mittel **(13)** zur Feinabstimmung erfolgt.

2. Verfahren nach Anspruch **1**,
**dadurch gekennzeichnet,**
dass die Empfangsrichtung ausgerichtet wird mittels periskopisch angeordneter, den Sendestrahl **(28)** des Senders übertragende Spiegel **(2, 3)** der Station, wobei Rückstreuung an den Spiegeloberflächen in dem empfangenen Strahl durch die Blendenwirkung von den Sendestrahl **(28)** einkoppelnden, koaxial in den Strahlengang des empfangenen Strahls eingefügten Spiegeln **(34, 35)** vermieden wird.

3. Verfahren nach einem der Ansprüche **1** oder **2**,
**dadurch gekennzeichnet,**
dass die Strahlrichtung durch den Einsatz eines Bakenlichts der Gegenstation detektiert wird, wobei das Bakenlicht des Senders auf einen CCD-Sensor **(27)** der Station geführt wird und die tonnenförmige Verzerrung des Bildes eines Gegenstands dazu ausgenützt wird, um die Winkelauflösung des Sensorsystems bei geringen Abweichungen von der optischen Achse auf Kosten der Randbereiche mit grösseren Abständen von der optischen Achse zu steigern.

4. Verfahren nach Anspruch **3**,
**dadurch gekennzeichnet,**
dass eine Blendwirkung des CCD-Sensors **(27)** durch das eigene Bakenlicht der Station mittels geometrischer Strahltrennung vermieden wird.

5. Station mit einem opto-mechanischen Aufbau zur optischen Übertragung von Daten über die Freiraumstrecke zwischen der Station und einer Gegenstation im Weltraum, mit Mitteln zur Phasenmodulation eines durch einen ersten Laser erzeugten Sendestrahls **(28)**, mit Mitteln **(10** bis **19, 21** bis **24)** zur homodynen Überlagerung eines von der Gegenstation ausgestrahlten circular polarisierten und zur Datenübertragung vorgesehenen Lichtstrahls **(1)** mit einem Lichtstrahl eines über einen Lichtwellenleiter **(20)** geleiteten zweiten lokalen Lasers der Station mittels Photodetektion **(16, 19)**, mit Mitteln **(13)** zur Feinabstimmung der homodynen Überlagerung zum Ausgleich von Relativbewegungen zwischen den Stationen, wobei die Station Spiegel **(2, 3)** zum Empfangen des Lichtstrahls **(1)**, eine Viertelwellenplatte **(6)** zur Rückwandlung des circular polarisierten Lichtstrahls **(1)** in linear polarisiertes Licht und eine Halbwellenplatte **(12)** zur genauen Einstellung der Richtung der Polarisation aufweist, wodurch eine Bewegung der Stationen um die durch ihre Strahlrichtung festgelegte Achse bezüglich der homodyn überlagerten Lichtstrahlen keine Änderung bei der Photodetektion hervorruft, und mit Mitteln **(29)** zur Korrektur der Auslenkung des Sendestrahls **(28)** der Station in Abhängigkeit von der mittels elektronischer Kommunikation übertragenen momentanen Auslenkung der Mittel **(13)** zur Feinabstimmung.

6. Station nach Anspruch **5**,
**dadurch gekennzeichnet,**
dass weitere Spiegel **(34, 35)** rhomboidförmig auf einer Quarzglasplatte **(5)** angeordnet sind, um eine Selbstkompensation der Sendestrahlrichtung gegenüber Verkippungen zu gewährleisten.

7. Station nach einem der vorangegangenen Ansprüche,
**dadurch gekennzeichnet,**
dass der Sendestrahl **(28)** zur Gegenstation über einen beweglichen Sendespiegel **(29)** geführt ist, der mit einer Messeinrichtung **(30, 36, 37)** und einem Sensor **(38)** zur Bestimmung des Vorhaltewinkels verbunden ist.

8. Station nach Anspruch **7**,
**dadurch gekennzeichnet,**
dass der bewegliche Sendespiegel **(29)** mit den Mitteln zur Feinabstimmung **(13)**, über die ein Trackingsignal gewonnen wird, in Verbindung steht, um den Vorhaltewinkel des Sendestrahls **(28)** in Abhängigkeit von der Feinabstimmung **(13)** vom aussermittigen Empfang des Empfangsstrahls **(1)** zu steuern.

9. Station nach einem der vorangehenden Ansprüche,
**dadurch gekennzeichnet,**
dass die optischen Elemente auf optischen Pfaden in rohrförmigen Halterungen **(61, 62, 63, 65, 66)** zusammengefasst und diese Halterungen **(61, 62, 63, 65, 66)** an ihren einen Enden an einer gemeinsamen flachen metallischen Struktur **(60)** befestigt sind, um einen Wärmefluss in den rohrförmigen Halterungen **(61, 62, 63, 65, 66)** in nur einer Richtung zu gewährleisten und um Biegespannungen infolge von durch vorhandene Temperaturdifferenzen hervorgerufenen Wärmedehnungen zu vermeiden.

10. Station nach einem der vorangehenden Ansprüche,
**dadurch gekennzeichnet,**
dass die Aussenöffnungen aller rohrförmigen Halterungen **(61, 62, 63, 65, 66)** durch eine als Strahlenschutz auf der metallischen flachen Struktur **(60)** angebrachte Quarzglasplatte **(5)** abgedeckt sind.

11. Station nach einem der Ansprüche **9** oder **10**,
**dadurch gekennzeichnet,**
dass die Verbindung zwischen der metallischen flachen Struktur **(60)** und der Quarzglasplatte **(5)** an mehreren Punkten durch eine elastische, strahlungsfeste Verbindung erfolgt, um spannungsfreie Scherbewegungen zwischen der Struktur **(60)** und der Quarzglasplatte **(5)** zu ermöglichen.

## Claims

1. Method for the optical transmission of data across the free space between a station and a partner station in space, wherein an emit beam (28) generated by a first laser is phase modulated, wherein photodetection (16, 19) is used to homodyne (10 to 19, 21 to 24) a circularly polarised light beam (1), emitted by the partner station and provided for data transmission, with a light beam from a second local laser from the station, which laser is conducted via a light guide (20), and wherein the homodyning operation is fine tuned (13) to equalise relative movements between the stations, the circularly polarised light beam (1) being received in the station and converted back into linearly polarised light by means of a quarter-wave panel (6) and the direction of polarisation being accurately set by means of a half-wave panel (12), with the result that polarisation causes the stations to move about the axis decided by the beam direction thereof without any change to the homodyned light beams during photodetection, and wherein a correction (29) of the deflection of the emit beam (28) from the station is effected in dependence upon the momentary deflection of the fine tuning means (13), which deflection is transmitted by means of electronic communication.

2. Method according to claim 1,
**characterised in that**
the receive direction is pointed by means of periscopically arranged mirrors (2, 3) on the station which transmit the emit beam (28) of the transmitter, and backscattering on the reflecting surfaces in the received beam is prevented by the screening effect of mirrors (34, 35) which launch the emit beam (28) and are inserted coaxially into the trajectory of the received beam.

3. Method according to either of claims 1 and 2,
**characterised in that**
the direction of the beam is detected by the use of a beacon light from the partner station, the beacon light from the transmitter being sent to a CCD sensor (27) on the station and the barrel-shaped distortion of the image of an object being utilised in order to enhance the angular resolution of the sensor system in the event of slight deviations from the optical axis at the expense of the marginal areas at greater distances from the optical axis.

4. Method according to claim 3,
**characterised in that**
a screening effect by the CCD sensor (27) is prevented by the station's own beacon light by means of geometric beam division.

5. Station with an opto-mechanical layout for the optical transmission of data across the free space between the station and a partner station in space, having means for phase modulation of an emit beam (28) generated by a first laser, means (10 to 19, 21 to 24) for homodyning, by means of photodetection (16, 19), a circularly polarised light beam (1), emitted by the partner station and provided for data transmission, with a light beam from a second local laser of the station, which laser is conducted via a light guide (20), means (13) for fine tuning the homodyning operation to equalise relative movements between the stations, the station having mirrors (2, 3) for receiving the light beam (1), a quarter-wave panel (6) for converting back the circularly polarised light beam (1) into linearly polarised light and a half-wave panel (12) for accurately adjusting the direction of polarisation, with the result that movement of the stations about the axis decided by the beam direction thereof does not cause any change in the homodyned light beams during photodetection, and having means (29) for correcting the deflection of the station's emit beam (28) in dependence upon the momentary deflection of the fine tuning means (13) transmitted by means of electronic communication.

6. Station according to claim 5,
**characterised in that**
additional mirrors (34, 35) are arranged in the shape of a rhomboid on a silica-glass panel (5) in order to ensure that the direction of the emit beam is automatically compensated with respect to any tilting.

7. Station according to any of the preceding claims,
**characterised in that**
the emit beam (28) is transferred to the partner station via a movable emit mirror (29) which is connected to a measuring device (30, 36, 37) and to a sensor (38) for determining the point ahead angle.

8. Station according to claim 7,
**characterised in that**
the movable emit mirror (29) communicates with the fine tuning means (13), via which a tracking signal is obtained, in order to control the point ahead angle of the emit beam (28) from off-centre reception of the receive beam (1) in dependence upon the fine tuning (13).

9. Station according to any of the preceding claims,
**characterised in that**
the optical elements are assembled on optical paths in tubular mounts (61, 62, 63, 65, 66) and these mounts (61, 62, 63, 65, 66) are affixed by one of their ends on a common flat metal structure (60) in order to ensure that heat flows in only one direction in the tubular mounts (61, 62, 63, 65, 66) and in order to avoid bending stresses as a result of thermal expansions produced by temperature differences present.

10. Station according to any of the preceding claims,
**characterised in that**
the external openings of all the tubular mounts (61, 62, 63, 65, 66) are covered by silica-glass panel (5) fitted as a radiation guard on the flat metal structure (60).

11. Station according to either of claims 9 and 10,
**characterised in that**
the connection between the flat metal structure (60) and the silica-glass panel (5) is effected at a plurality of points by a flexible, radiation-proof connection in order to permit stress-free shear movements between the structure (60) and the silica-glass panel (5).

## Revendications

1. Procédé de transmission optique de données sur le trajet en espace libre entre une station et une contre-station dans l'espace, dans lequel un faisceau lumineux (1) à polarisation circulaire et prévu pour la transmission des données, émis par la contre-station, est superposé de manière homodyne (10 à 19, 21 à 24), par photo-détection (16, 19), à un faisceau lumineux d'un deuxième laser local de la station, guidé par un guide de lumière (20), dans lequel un accord fin (13) de la superposition homodyne s'effectue entre les stations pour la compensation des déplacements relatifs, le faisceau lumineux à polarisation circulaire étant reçu dans la station et étant reconverti en lumière à polarisation linéaire, au moyen d'une plaque quart d'onde (6) et la direction de la polarisation étant précisément réglée au moyen d'une plaque demi-onde (12), ce qui fait que la polarisation ne provoque pas, lors de la photo-détection, de modification du déplacement des stations autour de l'axe défini par la direction de leurs faisceaux, en ce qui concerne les faisceaux lumineux superposés de manière homodyne, et dans lequel une correction (29) de la déviation du faisceau d'émission (28) de la station s'effectue en fonction de la déviation momentanée, transmise par communication électronique des moyens (13) d'accord fin.

2. Procédé selon la revendication 1, caractérisé en ce que la direction de réception est orientée au moyen de miroirs (2, 3) de la station, disposés de manière périscopique, transmettant le faisceau d'émission (28) de l'émetteur, une dispersion en retour sur les surfaces des miroirs étant évitée dans le faisceau reçu par l'effet d'écran de miroirs (34, 35), couplant le faisceau d'émission (28), insérés coaxialement dans le parcours du faisceau reçu.

3. Procédé selon l'une des revendications 1 ou 2, caractérisé en ce que la direction du faisceau est détectée par l'utilisation d'une lumière de balise de la contre-station, la lumière de balise de l'émetteur étant guidée vers un capteur CCD (27) de la station et la distorsion en barillet de l'image d'un objet étant utilisée pour accroître la résolution angulaire du système de capteurs en cas de faibles écarts par rapport à l'axe optique aux dépens des zones de bordure avec des distances plus grandes par rapport à l'axe optique.

4. Procédé selon la revendication 3, caractérisé en ce qu'on évite un effet d'écran du capteur CCD (27) par la propre lumière de balise de la station, au moyen d'une séparation géométrique des faisceaux.

5. Station de construction opto-mécanique, pour la transmission optique de données sur le trajet en espace libre entre la station et une contre-station spatiales, comportant des moyens de modulation de phase d'un faisceau d'émission (28) produit par un premier laser, comportant des moyens (10 à 19, 21 à 24) pour la superposition homodyne, par photo-détection (16, 19), d'un faisceau lumineux (1) de polarisation circulaire, émis par la contre-station et prévu pour la transmission des données avec un faisceau lumineux d'un deuxième laser local de la station, guidé par un guide de lumière (20), comportant des moyens (13) pour l'accord fin de la superposition homodyne en vue de la compensation de déplacements relatifs entre les stations, la station comportant des miroirs (2, 3) pour la réception des faisceaux lumineux (1), une plaque quart d'onde (6) pour la reconversion du faisceau lumineux (1) polarisé de manière circulaire en lumière à polarisation linéaire ainsi qu'une plaque demi-onde (12) pour le réglage précis de la direction de la polarisation, ce qui fait qu'un déplacement des stations autour de l'axe défini par la direction de leurs faisceaux par rapport aux faisceaux lumineux superposés de manière homodyne, ne provoque aucune modification lors de la photo-détection et comportant des moyens (29) pour la correction de la déviation du faisceau d'émission (28) de la station en fonction de la déviation momentanée des moyens (13) d'accord fin, transmise par communication électronique.

6. Station selon la revendication 5, caractérisée en ce que d'autres miroirs (34, 35) sont disposés en losange sur une plaque de verre de quartz (5), pour garantir une auto-compensation de la direction des faisceaux lumineux par rapport à des basculements.

7. Station selon l'une des revendications précédentes, caractérisée en ce que le faisceau d'émission (28) est guidé vers la contre-station par un miroir d'émission (29) mobile qui est relié à un dispositif de mesure (30, 36, 37) et à un capteur (38) en vue de la détermination de l'angle de déviation.

8. Station selon la revendication 7, caractérisée en ce que le miroir d'émission (29) mobile est en liaison avec les moyens d'accord fin (13), par lesquels est obtenu un signal de poursuite, pour commander l'angle de déviation du faisceau d'émission (28) en fonction de l'accord fin (13), de la réception excentrée du faisceau de réception (1).

9. Station selon l'une des revendications précédentes, caractérisée en ce que les éléments optiques sont réunis sur des pistes optiques dans des supports (61, 62, 63, 65, 66) tubulaires et ces supports (61, 62, 63, 65, 66) sont fixés à l'une de leurs extrémités à une structure métallique (60) plate commune, pour garantir un flux thermique dans les supports (61, 62, 63, 65, 66) tubulaires dans une seule direction seulement et pour éviter des contraintes de flexion par suite de dilatations thermiques provoquées par des différences de température existantes.

10. Station selon l'une des revendications précédentes, caractérisée en ce que les ouvertures extérieures de tous les supports (61, 62, 63, 65, 66) tubulaires sont recouvertes par une plaque de verre de quartz (5) placée en tant que protection contre les rayons sur la structure (60) métallique plate.

11. Station selon l'une des revendications 9 ou 10, caractérisée en ce que la liaison entre la structure (60) métallique plate et la plaque de verre de quartz (5) s'effectue en plusieurs points au moyen d'un assemblage élastique, résistant au rayonnement, afin de permettre des mouvements de cisaillement sans contrainte entre la structure (60) et la plaque de verre de quartz (5).
